(19) Europäisches Patentamt / European Patent Office / Office européen des brevets

(11) **EP 4 779 713 A1**

(12) **EUROPEAN PATENT APPLICATION**
published in accordance with Art. 153(4) EPC

(43) Date of publication:
**22.07.2026 Bulletin 2026/30**

(21) Application number: **25842574.3**

(22) Date of filing: **24.06.2025**

(51) International Patent Classification (IPC):
$H01M\ 4/36$ (2006.01)  $H01M\ 4/58$ (2010.01)
$H01M\ 4/62$ (2006.01)  $H01M\ 10/0525$ (2010.01)

(52) Cooperative Patent Classification (CPC):
Y02E 60/10

(86) International application number:
**PCT/CN2025/103167**

(87) International publication number:
**WO 2026/113371 (04.06.2026 Gazette 2026/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **28.11.2024 CN 202411719693**

(71) Applicant: **Guangdong Brunp Recycling Technology Co., Ltd.**
**Foshan, Guangdong 528137 (CN)**

(72) Inventors:
• **ZHANG, Xiaolu**
  **Foshan, Guangdong 528137 (CN)**
• **HUANG, Weiyan**
  **Foshan, Guangdong 528137 (CN)**
• **WANG, Tao**
  **Foshan, Guangdong 528137 (CN)**
• **YU, Haijun**
  **Foshan, Guangdong 528137 (CN)**
• **LI, Changdong**
  **Foshan, Guangdong 528137 (CN)**

(74) Representative: **LifeTech IP**
**Spies & Behrndt Patentanwälte PartG mbB**
**Elsenheimerstraße 47a**
**80687 München (DE)**

(54) **LITHIUM IRON PHOSPHATE POSITIVE ELECTRODE MATERIAL, AND PREPARATION METHOD THEREFOR AND USE THEREOF**

(57) Disclosed are a lithium iron phosphate cathode material, a preparation method therefor, and use thereof, which belong to the technical field of lithium iron phosphate cathode materials. The lithium iron phosphate cathode material comprises a lithium iron phosphate matrix and a carbon coating layer coated on a surface of the lithium iron phosphate matrix, wherein an average standard deviation of a thickness of the carbon coating layer of the lithium iron phosphate cathode material is $\sigma(d)$, and 0.05 nm$\leq\sigma(d)\leq$0.35 nm; and an average standard deviation of a carbon content of the lithium iron phosphate cathode material is $\sigma(C_{wt\%})$, and 0.02 wt%$\leq\sigma(C_{wt\%})\leq$0.35 wt%. The lithium iron phosphate cathode material has a uniform carbon coating layer, the thickness of the carbon coating layer and the carbon content at each position are relatively consistent, which is beneficial to improve the carrier mobility of the lithium iron phosphate cathode material and is conducive to further improvement of electrochemical performances of a battery prepared from the lithium iron phosphate cathode material.

Figure 1

**Description**

**CROSS-REFERENCE TO RELATED APPLICATION**

The present disclosure claims priority of Chinese patent application No. 202411719693.X filed to the China National Intellectual Property Administration on November 28, 2024, entitled "LITHIUM IRON PHOSPHATE CATHODE MATERIAL, PREPARATION METHOD THEREFOR, AND USE THEREOF", the entire contents of which are incorporated herein by reference.

**TECHNICAL FIELD**

The present disclosure relates to the technical field of lithium iron phosphate cathode materials, and particularly, to a lithium iron phosphate cathode material, a preparation method therefor, and use thereof.

**BACKGROUND**

As a new-generation lithium ion battery cathode material, a $LiFePO_4$ material becomes a hotspot of the current research due to its low price, small environmental pollution, excellent thermal stability and structural stability, high theoretical specific capacity and the like. However, based on its own structural defects, $LiFePO_4$ has low electron conductivity and lithium ion diffusion coefficient, leading to a fact that it cannot be fully utilized during the large-current charging and discharging, with undesirable rate capability.
In view of this, the present disclosure is proposed.

**SUMMARY**

An objective of the present disclosure is to provide a lithium iron phosphate cathode material, a preparation method therefor and use thereof, in order to solve or improve the above technical problem.
The present disclosure is implemented as follows.
In a first aspect, the present disclosure provides a lithium iron phosphate cathode material, which includes a lithium iron phosphate matrix and a carbon coating layer coated on a surface of the lithium iron phosphate matrix;

wherein an average standard deviation of a thickness of the carbon coating layer of the lithium iron phosphate cathode material is $\sigma(d)$, $\sigma(d) = \frac{\sum_{i=1}^{N_1} \sigma(d)_i}{N_1}$, and 0.05 nm≤$\sigma(d)$≤0.35 nm;

wherein an average standard deviation of a carbon content of the lithium iron phosphate cathode material is $\sigma(C_{wt\%})$, $\sigma(C_{wt\%}) = \frac{\sum_{i=1}^{N_1} \sigma(C_{wt\%})_i}{N_1}$, and 0.02 wt%≤$\sigma(C_{wt\%})$≤0.35 wt%;

wherein $N_1$ is a sample size of lithium iron phosphate cathode material particles when the lithium iron phosphate cathode material is tested, and $N_1$≥10;

wherein $\sigma(d)_i$ and $\sigma(C_{wt\%})_i$ are a standard deviation of a thickness of the carbon coating layer and a standard deviation of a carbon content of an $i$-th lithium iron phosphate cathode material particle when the lithium iron phosphate cathode material is tested, respectively;

wherein $\sigma(d)_i = \sqrt{\frac{\sum_{m=1}^{n}(d_m - \bar{d})^2}{n-1}}$, $\sigma(C_{wt\%})_i = \sqrt{\frac{\sum_{m=1}^{n}(C_m - \bar{C})^2}{n-1}}$, $n$ is a sample size of local positions of the $i$-th lithium iron phosphate cathode material particle during the testing, $n$≥5; $d_m$ is a thickness of a carbon coating layer corresponding to a $m$-th local location, and $\bar{d}$ is an average value of $d_m$ of $n$ local position samples in a unit of nm; and $C_m$ is a carbon content corresponding to the $m$-th local position, and $\bar{C}$ is an average value of $C_m$ of $n$ local position samples in a unit of wt%;

wherein the thickness of the carbon coating layer of the lithium iron phosphate cathode material is $d$, $d = \frac{\sum_{i=1}^{N_1} \bar{d}_i}{N_1}$, and 1 nm≤$d$≤10 nm; and $\bar{d}_i$ is an average value of $d_m$ of $n$ local position samples of the $i$-th lithium iron phosphate cathode material particle; and

wherein the carbon content of the lithium iron phosphate cathode material is $C$, $C = \frac{\sum_{i=1}^{N_1} \overline{C_i}}{N_1}$, and 1 wt%$\leq C \leq$10 wt%; and $\overline{C_i}$ is an average value of $C_m$ of $n$ local position samples of the $i$-th lithium iron phosphate cathode material particle.

In an optional embodiment, a shape factor of the lithium iron phosphate cathode material is $\varphi$, $\varphi = \frac{\sum_{j=1}^{N_2} \varphi_j}{N_2}$, and 0.5$\leq \varphi \leq$1;

wherein $N_2$ is a sample size of lithium iron phosphate cathode material particles when the lithium iron phosphate cathode material is tested, and $N_2 \geq$10;
wherein $\varphi_j$ is a shape factor of a $j$-th lithium iron phosphate cathode material particle when the lithium iron phosphate cathode material is tested; and

wherein $\varphi_j = \frac{D_s}{D}$, $D_s$ is a diameter of a standard circle with an area equal to a projected area in a transmission electron microscope (TEM) two-dimensional projection image of the $j$-th lithium iron phosphate cathode material particle, D is a diameter of a smallest circumscribed circle of a particle projection in the TEM two-dimensional projection image of the $j$-th lithium iron phosphate cathode material particle.

In an optional embodiment, a parameter factor $Q$ of the lithium iron phosphate cathode material satisfies = $\frac{\varphi}{\sigma(d) \times \sigma(C_{wt\%}) \times 100}$ , 0.07 nm$^{-1}\leq Q \leq$7 nm$^{-1}$.

In an optional embodiment, the lithium iron phosphate cathode material further includes at least one of the following features:

feature 1: the $\varphi$ of the lithium iron phosphate cathode material is 0.550-0.910;

feature 2: the $d$ of the lithium iron phosphate cathode material is 1.5 nm-9.1 nm;

feature 3: the $\sigma(d)$ of the lithium iron phosphate cathode material is 0.055 nm-0.343 nm;

feature 4: the $C$ of the lithium iron phosphate cathode material is 1.94 wt% -9.68 wt%;

feature 5: the $\sigma(C_{wt\%})$ of the lithium iron phosphate cathode material is 0.024 wt%-0.336 wt%;

feature 6: the $Q$ of the lithium iron phosphate cathode material is 0.072 nm$^{-1}$-6.596 nm$^{-1}$;

feature 7: a specific surface area of the lithium iron phosphate cathode material is 9.3 m$^2$/g-15.1 m$^2$/g;

feature 8: a $D_{50}$ of the lithium iron phosphate cathode material is 0.85 $\mu$m-1.50 $\mu$m;

feature 9: a carrier mobility of the lithium iron phosphate cathode material is 20.03$\times$10$^{-6}$ cm$^2$/V s-21.71$\times$10$^{-6}$ cm$^2$/V s; and

feature 10: a general formula of the lithium iron phosphate matrix is $Li_{1-x}A_xFe_{1-y}M_y(PO_{4-a})D_a$, wherein A includes at least one of Na and Mg; M comprises at least one of Al, Ni, Co, Mn, Ti, La, Ce, Cr, Mo, Ca, Ga, V, Nb, Zr, In, Zn and Y; D comprises at least one of F and S; and 0$\leq$x$\leq$0.1, 0$\leq$y$\leq$0.1 and 0$\leq$a$\leq$0.1.

In a second aspect, the present disclosure provides a method for preparing the lithium iron phosphate cathode material according to any one of the above embodiments, which includes the following steps: performing ball milling on a lithium iron phosphate matrix and a composite carbon source to obtain a mixed precursor; and drying and sintering the mixed precursor in sequence to obtain the lithium iron phosphate cathode material.

In an optional embodiment, the preparation of the lithium iron phosphate cathode material has at least one of the following features:

feature 11: a preparation of the lithium iron phosphate matrix including: mixing a first solution containing a ferrous salt with a second solution containing a lithium source and phosphate to obtain a mixed solution; and adjusting a pH value of the mixed solution to 6-8 followed by hydrothermal reaction, and then collecting a solid after the reaction is completed;

feature 12: a preparation of the composite carbon source including: mixing a polyethylene glycol gel with a molten carbon source, wherein the carbon source comprises at least one of sorbitol, erythritol, fructose, rhamnose and malic acid; a molar ratio of a lithium element in the lithium iron phosphate matrix to the carbon source to the polyethylene glycol is 1:0.03-0.05:0.02-0.04;

feature 13: the ball milling is performed for 1 h-2 h;

feature 14: the mixed precursor is dried at a temperature of 90 °C-110 °C;

feature 15: the mixed precursor is dried for 10 h-14 h; and

feature 16: the sintering including: performing sintering at 400 °C-550 °C and maintaining at this temperature for 2 h-5 h, and then performing sintering at 650 °C-750 °C and maintaining at this temperature for 6 h-8 h.

In an optional embodiment, the preparation of the lithium iron phosphate matrix includes at least one of the following conditions:

condition 1: the general formula of the lithium iron phosphate matrix is $Li_{1-x}A_xFe_{1-y}M_y(PO_{4-a})D_a$, wherein when the lithium iron phosphate matrix contains M, A and D elements, the first solution further contains an M source, and the second solution further contains an A source and a D source;

condition 2: the first solution is sprayed into the second solution under a condition of stirring via high-pressure atomization; or, the second solution is sprayed into the first solution under a condition of stirring via high-pressure atomization;

condition 3: the hydrothermal reaction is performed at a temperature of 150 °C-180 °C; and

condition 4: the hydrothermal reaction is performed for 8 h-10 h.

In an optional embodiment, the ferrous salt includes at least one of ferrous oxalate, ferrous chloride and ferrous acetate; or

the lithium source includes at least one of lithium oxalate, lithium chloride and lithium acetate; or

the phosphate includes at least one of ammonium dihydrogen phosphate and ammonium hydrogen phosphate; or

the M source is a water-soluble salt of a M element; or

the A source includes at least one of sodium fluoride, magnesium fluoride, sodium chloride, magnesium chloride and sodium sulfide; or

the D source includes at least one of ammonium fluoride, lithium fluoride, ammonium sulfide, lithium sulfide, ammonium bisulfite and thiourea; or

a molar ratio of a total mole number of an iron element in the ferrous salt and the M element in the M source to a total mole number of the lithium element in the lithium source and a A element in the A source to a mole number of P element in the phosphate is 1:1:0.95-1.1, wherein a molar ratio of the lithium element to the A element is 0.9-1:0-0.1; a molar ratio of the iron element to the M element is 0.9-1:0-0.1; a molar ratio of an oxygen element in the phosphate to a D element in the D source is 3.9-4:0-0.1; or

a high-pressure atomizing spray gun used for high-pressure atomization has a nozzle diameter of 0.3 mm-0.6 mm and an operation pressure of 0.2 MPa-0.4 MPa; or

a stirring rate of the stirring condition is 600 r/min-1000 r/min.

In a third aspect, the present disclosure provides a cathode electrode sheet, wherein an active material of the cathode electrode sheet includes the lithium iron phosphate cathode material according to the above embodiments.

In a fourth aspect, the present disclosure provides a battery, which includes the cathode electrode sheet according to the above embodiment.

The present disclosure has the below beneficial effects.

The standard deviation of the thickness of the carbon coating layer $\sigma(d)_i$ and the standard deviation of the carbon content $\sigma(C_{wt\%})_i$ proposed in the present disclosure respectively reflect the dispersion degrees of the thicknesses of the carbon coating layer and carbon contents on different positions of the lithium iron phosphate cathode material particle relative to respective average values to characterize the coating uniform degree of the carbon coating layer on the surface of the lithium iron phosphate matrix. The uniform coating of the carbon coating layer on the surface of the lithium iron phosphate matrix may inhibit the fusion of grains and growth of particles, thereby achieving the purposes of controlling the size of the particles and restraining the agglomeration of the particles. The average standard deviation of the thickness of the carbon coating layer $\sigma(d)$ and the average standard deviation of the carbon content $\sigma(C_{wt\%})$ may measure the distribution uniformity of the carbon layer of the surface of the lithium iron phosphate cathode material, the smaller $\sigma(d)$ and $\sigma(C_{wt\%})$ values indicate the more uniform coating of the carbon coating layer of the surface of the material and the better conductivity of the material; and the higher $\sigma(d)$ and $\sigma(C_{wt\%})$ values indicate the poorer uniformity of the carbon coating layer, leading to a fact that the charging and discharging performance of the cathode material becomes poor.

In addition, the values of the carbon coating layer thickness $d$ and carbon content $C$ of the lithium iron phosphate cathode material need to be within an appropriate range; the higher $d$ value is more disadvantageous for intercalation and deintercalation of lithium ions and diffusion of lithium ions at an electrode-electrolyte interface; and the higher $C$ value more easily inhibits the formation of a crystalline $LiFePO_4$ phase and reduces the compacted density of the material.

The $\sigma(d)$, $\sigma(C_{wt\%})$, $d$ and $C$ of the lithium iron phosphate cathode material provided in the present disclosure are within the ranges of $\sigma(d)$, $\sigma(C_{wt\%})$, $d$ and $C$ provided in the present disclosure; and the lithium iron phosphate cathode material provided in the present disclosure has a uniform carbon coating layer, the thickness of the carbon coating layer and the carbon content of each position are relatively consistent, which is conducive to improving the carrier mobility, conductivity and the like of the lithium iron phosphate cathode material, and helps to further improve the electrochemical performance of the battery prepared from the lithium iron phosphate cathode material.

**BRIEF DESCRIPTION OF DRAWINGS**

To more clearly explaining the technical solution of the embodiments of the present disclosure, drawings required to be used in the embodiments will be simply introduced, it should be understood that the following accompanying drawings merely show some embodiments of the present disclosure, and therefore cannot be considered as limiting the scope of the present disclosure, persons of ordinary skill in the art may also obtain other relevant drawings according to these accompanying drawings without create efforts.

Figure 1 is a TEM image of a lithium iron phosphate cathode material prepared in Example 6; and
Figure 2 is a TEM image of a lithium iron phosphate cathode material prepared in Comparative Example 4.

**DETAILED DESCRIPTION**

To make the objective, technical solution and advantages of the embodiments of the present disclosure more clear, the technical solutions in the embodiments of the present disclosure will be clearly and completely described below. For those without specified conditions in the examples, the operations shall be carried out in accordance with conventional conditions or the conditions recommended by the manufacturer. The reagents or instruments used without specified manufacturers are all conventional products available through commercial purchase.

Next, a specific description of the lithium iron phosphate cathode material provided in the present disclosure, as well as its preparation method and use will be made.

The present disclosure provides a lithium iron phosphate cathode material. The lithium iron phosphate cathode material includes a lithium iron phosphate matrix and a carbon coating layer coated on a surface of the lithium iron phosphate matrix.

An average standard deviation of a thickness of the carbon coating layer of the lithium iron phosphate cathode material is $\sigma(d)$, $\sigma(d) = \frac{\sum_{i=1}^{N_1} \sigma(d)_i}{N_1}$ , and 0.05 nm$\leq\sigma(d)\leq$0.35 nm.

An average standard deviation of a carbon content of the lithium iron phosphate cathode material is $\sigma(C_{wt\%})$,

$\sigma(C_{wt\%}) = \frac{\sum_{i=1}^{N_1} \sigma(C_{wt\%})_i}{N_1}$ , and 0.02 wt%$\leq\sigma(C_{wt\%})\leq$0.35 wt%;

wherein $N_1$ is a sample size of lithium iron phosphate cathode material particles when the lithium iron phosphate cathode material is tested, and $N_1 \geq 10$.

$\sigma(d)_i$ and $\sigma C_{wt\%})_i$ are a standard deviation of a thickness of the carbon coating layer and a standard deviation of a carbon content of an $i$-th lithium iron phosphate cathode material particle when the lithium iron phosphate cathode material is tested, respectively.

$$\sigma(d)_i = \sqrt{\frac{\sum_{m=1}^{n}(d_m - \bar{d})^2}{n-1}}, \ \sigma(C_{wt\%})_i = \sqrt{\frac{\sum_{m=1}^{n}(C_m - \bar{C})^2}{n-1}},$$

$n$ is a sample size of local positions of the $i$-th lithium iron phosphate cathode material particle during the testing, and $n \geq 5$; $d_m$ is a thickness of a carbon coating layer corresponding to a $m$-th local location, and $\bar{d}$ is an average value of $d_m$ of $n$ local position samples in a unit of nm; and $C_m$ is a carbon content corresponding to the $m$-th local position, and $\bar{C}$ is an average value of $C_m$ of $n$ local position samples in a unit of wt%;

the thickness of the carbon coating layer of the lithium iron phosphate cathode material is $d$, $d = \frac{\sum_{i=1}^{N_1}\bar{d}_i}{N_1}$, and 1 nm $\leq d \leq$ 10 nm;

the carbon content of the lithium iron phosphate cathode material is $C$, $C = \frac{\sum_{i=1}^{N_1}\bar{C}_i}{N_1}$, and 1 wt% $\leq C \leq$ 10 wt%;

$\bar{d}_i$ is an average value of $d_m$ of $n$ local position samples of the $i$-th lithium iron phosphate cathode material particle; and

$\bar{C}_i$ is an average value of $C_m$ of $n$ local position samples of the $i$-th lithium iron phosphate cathode material particle.

The local position of the above lithium iron phosphate cathode material particle is selected randomly. In some preferred embodiments, it is not deliberately defined in a specific range. During the selection, it is not concentrated in a relatively small range or area of the particles. Preferably, the sample selection range covers the entire cathode material particle.

The standard deviation of the thickness of the carbon coating layer $\sigma(d)_i$ and the standard deviation of the carbon content $\sigma(C_{wt\%})_i$ respectively reflect the dispersion degrees of the thicknesses of the carbon coating layer and carbon contents on different positions of the lithium iron phosphate cathode material particle relative to respective average values to characterize the coating uniform degree of the carbon coating layer on the surface of the lithium iron phosphate matrix particle. Typically, the smaller $\sigma(d)_i$ and $\sigma(C_{wt\%})_i$ values indicate the smaller dispersion degrees of the thickness of the carbon coating layer and carbon content of the surface of the cathode material particle relative to respective average values, the more uniform coating of the carbon coating layer and the better conductivity of the material; and the higher $\sigma(d)_i$ and $\sigma(C_{wt\%})_i$ values indicate the larger dispersion degrees of the thickness of the carbon coating layer and carbon content of the surface of the cathode material particle relative to respective average values and the poorer carbon coating layer uniformity, leading to a fact that the charging and discharging performance of the cathode material becomes poor. Further, the standard deviation of the thickness of the carbon coating layer $\sigma(d)$ and the standard deviation of the carbon content $\sigma(C_{wt\%})$ are in accordance with the above change rule, and their values may measure the distribution uniformity of the carbon layer of the surface of the lithium iron phosphate cathode material.

In addition, the values of the carbon coating layer thickness $d$ and carbon content $C$ of the lithium iron phosphate cathode material need to be within an appropriate range, the higher $d$ value is more disadvantageous for the intercalation and deintercalation of lithium ions and diffusion of lithium ions at the electrode-electrolyte interface; the higher $C$ value more easily inhibits the formation of a crystalline LiFePO$_4$ phase and reduces the compacted density of the material.

Based on the above, the lithium iron phosphate cathode material satisfying $\sigma(d)$, $\sigma(C_{wt\%})$, $d$ and $C$ ranges provided in the present disclosure has a uniform carbon coating layer, the thickness of the carbon coating layer and the carbon content of each position are relatively consistent, which is conducive to improving the carrier mobility, conductivity and the like of the lithium iron phosphate cathode material, and helps to further improve the electrochemical performance of the battery prepared from the lithium iron phosphate cathode material.

In some optional embodiments, the $d$ of the lithium iron phosphate cathode material may be 1.5 nm-9.1 nm, for example 1.5 nm, 1.6 nm, 1.7 nm, 2.7 nm, 3.0 nm, 3.8 nm, 4.6 nm, 5.5 nm, 6.3 nm, 8.7 nm or 9.1 nm, etc., or other values within the range of 1.5 nm-9.1 nm.

In some optional embodiments, the $\sigma(d)$ of the lithium iron phosphate cathode material may be 0.055 nm-0.343 nm, for example 0.055 nm, 0.063 nm, 0.101 nm, 0.112 nm, 0.116 nm, 0.136 nm, 0.210 nm, 0.254 nm, 0.304 nm, 0.308 nm, 0.310 nm, 0.314 nm, 0.338 nm or 0.343 nm, etc., or other values within the range of 0.055 nm-0.343 nm.

In some optional embodiments, the C of the lithium iron phosphate cathode material may be 1.94 wt%-9.68 wt%, for example 1.94 wt%, 1.95 wt%, 1.96 wt%, 1.97 wt%, 1.98 wt%, 1.99 wt%, 3.47 wt%, 3.75 wt%, 4.75 wt%, 5.15 wt%, 6.25 wt%, 7.55 wt%, 9.23 wt% or 9.68 wt%, etc., or other values within the range of 1.94 wt%-9.68 wt%.

In some optional embodiments, the $\sigma(C_{wt\%})$ of the lithium iron phosphate cathode material may be 0.024 wt% -0.336 wt%, for example 0.024 wt%, 0.040 wt%, 0.089 wt%, 0.105 wt%, 0.107 wt%, 0.130 wt%, 0.204 wt%, 0.240 wt%, 0.296 wt%, 0.298 wt%, 0.301 wt%, 0.306 wt%, 0.325 wt% or 0.336 wt%, etc., or other values within the range of 0.024 wt%-0.336 wt%.

In some optional embodiments, a shape factor of the lithium iron phosphate cathode material is $\varphi$, $\varphi = \frac{\sum_{j=1}^{N_2} \varphi_j}{N_2}$, and $0.5 \leq \varphi \leq 1$;

wherein $N_2$ is a sample size of lithium iron phosphate cathode material particles when the lithium iron phosphate cathode material is tested, and $N_2 \geq 10$;

$\varphi_j$ is a shape factor of a $j$-th lithium iron phosphate cathode material particle when the lithium iron phosphate cathode material is tested; and

$$\varphi_j = \frac{D_s}{D},$$

$D_s$ is a diameter of a standard circle with an area equal to a projected area in a transmission electron microscope (TEM) two-dimensional projection image of the $j$-th lithium iron phosphate cathode material particle, and $D$ is a diameter of a smallest circumscribed circle of a particle projection in the TEM two-dimensional projection image of the $j$-th lithium iron phosphate cathode material particle.

The shape factor $\varphi$ refers to the degree of deviation of the shape of the lithium iron phosphate cathode material particle from a standard sphere ($\varphi$=1). The $\varphi$ value is closer to 1, indicating that the particle morphology is closer to a spherical shape, and the morphology of the particle is more regular. In the present disclosure, the $\varphi$ value is closer to 1, indicating that the morphology of the lithium iron phosphate cathode material particle is more regular, the particle size of the lithium iron phosphate cathode material particle is more relatively uniform and the dispersibility of the particle is better, which is more conducive to the diffusion and transmission of lithium ions and electrons; and the smaller $\varphi$ value indicates the poorer morphological regularity of the lithium iron phosphate cathode material particle and the more serious agglomeration between the particles, affecting the electrochemical performance of the battery made from the lithium iron phosphate cathode material.

Based on the above, the lithium iron phosphate cathode material satisfying the range of $\varphi$ provided by the present disclosure has regular particle morphology. The homogeneous particle morphology is not only conducive to the diffusion of lithium ions, but also helps to enhance the yield strength of the electrode prepared from the lithium iron phosphate cathode material, and improves the electrochemical performance of the battery prepared from the above electrode.

In some optional embodiments, the $\varphi$ of the lithium iron phosphate cathode material may be 0.550-0.910, such as 0.550, 0.670, 0.673, 0.677, 0.695, 0.702, 0.712, 0.761, 0.858, 0.880, 0.893, 0.907 or 0.910, or other values within the range of 0.550-0.910.

In some optional embodiments, the carrier mobility of the lithium iron phosphate cathode material may be $20.03 \times 10^{-6}$ cm$^2$/V ·s-$21.71 \times 10^{-6}$ cm$^2$/V ·s, such as $20.03 \times 10^{-6}$ cm$^2$/V ·s, $21.05 \times 10^{-6}$ cm$^2$/V ·s, $20.20 \times 10^{-6}$ cm$^2$/V ·s, $20.26 \times 10^{-6}$ cm$^2$/V ·s, $20.29 \times 10^{-6}$ cm$^2$/V ·s, $20.30 \times 10^{-6}$ cm$^2$/V ·s, $20.33 \times 10^{-6}$ cm$^2$/V ·s, $20.42 \times 10^{-6}$ cm$^2$/V ·s, $20.50 \times 10^{-6}$ cm$^2$/V ·s, $20.60 \times 10^{-6}$ cm$^2$/V ·s, $20.62 \times 10^{-6}$ cm$^2$/V ·s, $20.86 \times 10^{-6}$ cm$^2$/V ·s, $21.38 \times 10^{-6}$ cm$^2$/V ·s or $21.71 \times 10^{-6}$ cm$^2$/V ·s, or other values within the range of $20.03 \times 10^{-6}$ cm$^2$/V ·s-$21.71 \times 10^{-6}$ cm$^2$/V ·s.

In some optional embodiments, a parameter factor $Q$ of the lithium iron phosphate cathode material satisfies $Q = \frac{\varphi}{\sigma(d) \times \sigma(C_{wt\%}) \times 100}$ , and $0.07$ nm$^{-1} \leq Q \leq 7$ nm$^{-1}$.

The corresponding relationship between the above parameter factor $Q$ and $\varphi$, $\sigma(d)$ and $\sigma(C_{wt\%})$ may comprehensively reflect the electrochemical performance of the battery prepared from the lithium iron phosphate cathode material. When the closer the $\varphi$ is to 1 (i.e., the more regular the particle morphology) and the smaller the $\sigma(d)$ and $\sigma(C_{wt\%})$ are (i.e., the more uniform the carbon coating layer on the material surface), at this moment, the larger the obtained parameter factor $Q$ value is, the more excellent the electrochemical performance of the battery prepared from the lithium iron phosphate cathode material is.

In some optional embodiments, the $Q$ of the lithium iron phosphate cathode material may be 0.072 nm$^{-1}$-6.596 nm$^{-1}$, such as 0.072 nm$^{-1}$, 0.073 nm$^{-1}$, 0.074 nm$^{-1}$, 0.076 nm$^{-1}$, 0.079 nm$^{-1}$, 0.111 nm$^{-1}$, 0.205 nm$^{-1}$, 0.505 nm$^{-1}$, 0.540 nm$^{-1}$,

0.648 nm$^{-1}$, 1.012 nm$^{-1}$, 3.405 nm$^{-1}$ or 6.596 nm$^{-1}$, or other values within the range of 0.072 nm$^{-1}$-6.596 nm$^{-1}$.

Based on the above, the lithium iron phosphate cathode material simultaneously satisfying the $\sigma(d)$, $\sigma(C_{wt\%})$ and $Q$ value ranges provided in the present disclosure has a regular particle morphology and a uniform carbon coating layer, enables the battery comprising lithium iron phosphate as the cathode material to have better electrochemical performance (such as specific capacity, rate capability and cycle performance).

In some optional embodiments, a specific surface area of the above lithium iron phosphate cathode material may be 9.3 m$^2$/g-15.1 m$^2$/g, such as 9.3 m$^2$/g, 10.2 m$^2$/g, 11.7 m$^2$/g, 11.9 m$^2$/g, 12.0 m$^2$/g, 12.1 m$^2$/g, 12.3 m$^2$/g, 12.4 m$^2$/g, 12.6 m$^2$/g, 12.8 m$^2$/g, 13.2 m$^2$/g, 13.7 m$^2$/g, 14.3m$^2$/g or 15.1 m$^2$/g, or other values within the range of 9.3 m$^2$/g-15.1 m$^2$/g.

In some optional embodiments, a $D_{50}$ of the above lithium iron phosphate cathode material may be 0.85 μm-1.50 μm, such as 0.85 μm, 0.90 μm, 0.96 μm, 1.00 μm, 1.04 μm, 1.07 μm, 1.06 μm, 1.08 μm, 1.10 μm, 1.12 μm, 1.14 μm, 1.16 μm, 1.35 μm or 1.50 μm, or other values within the range of 0.85 μm-1.50 μm.

In some optional embodiments, a general formula of the lithium iron phosphate matrix may be $Li_{1-x}A_xFe_{1-y}M_y(PO_{4-a})D_a$, wherein A for example may comprise at least one of Na and Mg; M for example may comprise at least one of Al, Ni, Co, Mn, Ti, La, Ce, Cr, Mo, Ca, Ga, V, Nb, Zr, In, Zn and Y; D for example may comprise at least one of F and S; and $0 \leq x \leq 0.1$, $0 \leq y \leq 0.1$ and $0 \leq a \leq 0.1$.

Accordingly, the present disclosure further provides a preparation method of the above lithium iron phosphate cathode material, including the following steps: performing ball milling on a lithium iron phosphate matrix and a composite carbon source to obtain a mixed precursor; and drying and sintering the mixed precursor in sequence to obtain the lithium iron phosphate cathode material.

In some optional embodiments, a preparation of the lithium iron phosphate matrix may comprise: mixing a first solution containing a ferrous salt with a second solution containing a lithium source and phosphate to obtain a mixed solution; and adjusting a pH value of the mixed solution to 6-8 followed by hydrothermal reaction, and then collecting a solid after the reaction is completed.

The ferrous salt may exemplarily but not restrictively comprise at least one of ferrous oxalate, ferrous chloride and ferrous acetate.

The lithium source may exemplarily but not restrictively comprise at least one of lithium oxalate, lithium chloride and lithium acetate.

The phosphate may exemplarily but not restrictively comprise at least one of ammonium dihydrogen phosphate and ammonium hydrogen phosphate.

In the present disclosure, when the lithium iron phosphate matrix further contains an M element, the M source is present in the first solution; and when the lithium iron phosphate matrix further contains at least one of an A element and a D element, the corresponding A source and D source are present in the second solution.

As an example, the lithium iron phosphate matrix also simultaneously contains M, A and D elements; the above first solution containing the ferrous salt further contains the M source, and the above second solution containing the lithium source and phosphate also contains the A source and the D source. Under this condition, the ferrous salt and the M source are dispersed into deionized water, and purged with nitrogen for a period of time (such as 1 h) under the condition of stirring to remove dissolved oxygen in the solution to obtain the first solution. Accordingly, the lithium source, the phosphate, the A source and the D source are dispersed into deionized water and stirred at a high speed under the protection of a nitrogen atmosphere to obtain the second solution.

The above M source may be a water-soluble salt of the M element.

The A source may exemplarily but not restrictively comprise at least one of sodium fluoride, magnesium fluoride, sodium chloride, magnesium chloride and sodium sulfide.

The D source may exemplarily but not restrictively comprise at least one of ammonium fluoride, lithium fluoride, ammonium sulfide, lithium sulfide, ammonium bisulfite and thiourea.

In some optional embodiments, a ratio of a total mole number of an iron element in the ferrous salt and the M element in the M source to a total mole number of the lithium element in the lithium source and a A element in the A source to a mole number of a P element in the phosphate is 1:1:0.95-1.1, such as 1:1:0.95, 1:1:0.96, 1:1:0.97, 1:1:0.98, 1:1:0.99, 1:1:1, 1:1:1.05 or 1:1:1.1, or other values within the range of 1:1:0.95-1.1.

In some optional embodiments, a molar ratio of the lithium element to the A element may be 0.9-1:0-0.1, such as 0.9:0.1, 0.95:0.05 or 1:0, or other values within the range of 0.9-1:0-0.1.

In some optional embodiments, a molar ratio of the iron element to the M element may be 0.9-1:0-0.1, such as 0.9:0.1, 0.95:0.05 or 1:0, or other values within the range of 0.9-1:0-0.1.

In some optional embodiments, a molar ratio of an oxygen element in the phosphate to a D element in the D source may be 3.9-4:0-0.1, such as 3.9:0.1, 3.95:0.05 or 4:0, or other values within the range of 3.9-4:0-0.1.

In some optional embodiments, the first solution may be sprayed into the second solution under a condition of stirring via high-pressure atomization. In other some optional embodiments, the second solution may be sprayed into the first solution under the condition of stirring via high-pressure atomization.

A nozzle diameter of a high-pressure atomizing spray gun used for high-pressure atomization may be 0.3 mm-0.6 mm, such as 0.3 mm, 0.35 mm, 0.4 mm, 0.45 mm, 0.5 mm, 0.55 mm or 0.6 mm, or other values within the range of 0.3 mm-0.6 mm.

An operation pressure for high-pressure atomization may be 0.2 MPa-0.4 MPa, such as 0.2 MPa, 0.25 MPa, 0.3 MPa, 0.35 MPa or 0.4 MPa, or other values within the range of 0.2 MPa-0.4 MPa.

In some optional embodiments, a stirring speed of the stirring condition may be 600 r/min-1000 r/min, such as 600 r/min, 650 r/min, 700 r/min, 750 r/min, 800 r/min, 850 r/min, 900 r/min, 950 r/min or 1000 r/min, or other values within the range of 600 r/min-1000 r/min.

In some optional embodiments, the pH value of the mixed solution may be adjusted using ammonia water. The pH value may be adjusted to 6, 6.5, 7, 7.5 or 8, or other values within the range of 6-8.

After the pH value is adjusted, the materials may be further stirred for a period of time at room temperature under the protection of an inert atmosphere (such as nitrogen atmosphere) and then transferred to a stainless steel autoclave with a polytetrafluoroethylene lining for hydrothermal reaction. After the reaction is completed, the product is cooled to room temperature and then filtered, a solid phase obtained by the filtration was subjected to centrifugal washing with deionized water and absolute ethyl alcohol, and finally dried to obtain the lithium iron phosphate matrix.

A temperature of the hydrothermal reaction may be 150 °C-180 °C, such as 150 °C, 155 °C, 160 °C, 165 °C, 170 °C, 175 °C or 180 °C, or other values within the range of 150 °C-180 °C.

The hydrothermal reaction may be performed for 8 h-10 h, such as 8 h, 8.5 h, 9 h, 9.5 h or 10 h, or other values within the range of 8 h-10 h.

The drying may be performed at a temperature of 60 °C-80 °C, such as 60 °C, 65 °C, 70 °C, 75 °C or 80 °C, or other values within the range of 60 °C-80 °C.

The drying may be performed for 10 h-14 h, such as 10 h, 10.5 h, 11 h, 11.5 h or 12 h, or other values within the range of 10 h-14 h.

Based on the above, in the present disclosure, the first solution (or second solution) is poured into the high-pressure atomizing spray gun to be atomized via a high-pressure nozzle and then sprayed into the second solution (or first solution) under the high-speed stirring in an atomizing state to obtain a uniform seed crystal precursor solution, then a pH value of the seed crystal precursor solution is adjusted with ammonia water, and then an obtained solution is subjected to hydrothermal reaction in the autoclave to obtain lithium iron phosphate matrix particles. The high-pressure atomization and high-speed stirring manner may enhance the initial micro mixing and uniform dispersion among ferrous ions, lithium ions and phosphate ions, effectively relieves the rate difference of reaction ions forming lithium iron phosphate crystal nucleuses due to too high local concentration, and provides a uniform micro nucleation environment for the generation of a seed crystal precursor. The seed crystal continues to undergo hydrothermal reaction, so as to form the lithium iron phosphate matrix with concentrated particle size distribution, good dispersibility and uniform morphology.

In some optional embodiments, a preparation of the composite carbon source may comprise: mixing a polyethylene glycol gel with a molten carbon source.

The carbon source may exemplarily but not restrictively comprise at least one of sorbitol, erythritol, fructose, rhamnose and malic acid.

A molar ratio of the lithium element in the lithium iron phosphate matrix to the carbon source to polyethylene glycol may be 1:0.03-0.05:0.02-0.04, such as 1:0.03:0.02, 1:0.03:0.03, 1:0.03:0.04, 1:0.04:0.02, 1:0.04:0.03, 1:0.04:0.04, 1:0.05:0.02, 1:0.05:0.03 or 1:0.05:0.04, or other values within the range of 1:0.03-0.05:0.02-0.04.

The above carbon source may be heated to 130 °C-150 °C in a high-temperature electric furnace for melting. Specifically, the fusion temperature may be correspondingly set according to the selected carbon source to achieve the melting of the carbon source.

The polyethylene glycol gel may be prepared by dissolving polyethylene glycol gel powders into dimethyl sulfoxide, evenly stirring a result solution and then raising to a temperature of 50 °C-60 °C for water bath heating. In addition, the polyethylene glycol gel may also be prepared by using other methods and conditions.

In some optional embodiments, the ball milling may be performed on the lithium iron phosphate matrix and the composite carbon source for 1 h-2h, such as 1 h, 1.5 h or 2 h.

In some optional embodiments, the mixed precursor may be dried at a temperature of 90 °C-110 °C, such as 90 °C, 95 °C, 100 °C, 105 °C or 110 °C, or other values within the range of 90 °C-110 °C.

The mixed precursor may be dried for 10 h-14 h, such as 10 h, 11 h, 12 h, 13 h or 14 h, or other values within the range of 10 h-14 h.

In some optional embodiments, the above mixed precursor after drying is ground and smashed, subsequently, the sufficiently ground precursor is sintered in a muffle furnace filled with high-pure argon.

The sintering includes a first stage and a second stage, wherein, the first stage may comprise sintering at 400 °C-550 °C (such as 400°C, 420°C, 450°C, 480°C, 500°C, 520°C or 550°C) and maintaining at this temperature for 2 h-5 h (such as 2 h, 3 h, 4 h or 5 h), and the second stage may comprise sintering at 650 °C-750 °C (such as 650 °C, 680 °C, 700 °C, 720 °C or 750 °C) and maintaining at this temperature for 6 h-8 h (such as 6 h, 7 h or 8 h).

To further enhance the conductivity and crystallinity of the lithium iron phosphate, in the present disclosure, the molten carbon source is mixed with the polyethylene glycol gel to obtain the composite carbon source, then the composite carbon source and the lithium iron phosphate matrix are subjected to ball-milling, mixing, drying, and low-temperature and high-temperature roasting in the muffle furnace in sequence to obtain the lithium iron phosphate cathode material. In this process, carbon coating is performed on the lithium iron phosphate matrix based on the molten carbon source and the polyethylene glycol gel as the composite carbon source. Compared with the traditional solid-phase method, the molten carbon source may be easily wrapped and coated on the surface of the lithium iron phosphate matrix, a carbon reticular structure formed by the polyethylene glycol gel during the drying and calcining may maintain the stability of the carbon coating layer coated on the surface of the particle to form the uniform carbon coating layer. In addition, compared with a hydrosolvent, dimethyl sulfoxide has lower viscosity and surface tension. The polyethylene glycol gel is prepared by using dimethyl sulfoxide as a solvent. After the lithium iron phosphate matrix is mixed with the composite carbon source, the excellent wettability of dimethyl sulfoxide enables the molten carbon source to be more uniformly coated on the surface of the lithium iron phosphate matrix and penetrate into the micropores of the lithium iron phosphate matrix.

In conclusion, the lithium iron phosphate cathode material with regular morphology and uniform carbon coating may be prepared by the preparation method disclosed in the present disclosure.

In addition, the present disclosure further provides a cathode electrode sheet. The active material of the cathode electrode sheet includes the above lithium iron phosphate cathode material.

The present disclosure further provides a battery monomer. The battery monomer includes the above cathode electrode sheet.

As an example, the above battery monomer may be used in, but not limited to, electric devices such as vehicles, ships or aircrafts.

The present disclosure further provides a battery including the above battery monomer.

The present disclosure further provides an electric device. The electric device includes the above battery monomer and/or battery. As an example, the electric device may be, but not limited to, mobile phones, tablets, laptops, electric toys, power tools, electric bikes, electric vehicles, ships, spacecrafts, etc. Wherein, the electric toys may include fixed or mobile electric toys, e.g., game consoles, electric car toys, electric ship toys, electric aircraft toys, etc., and the spacecrafts may include airplanes, rockets, space shuttles, spaceships, etc.

Next, the features and performances of the present disclosure will be further described in detail with reference to embodiments.

Example 1

This example was different from the below Example 3 in that:

In S1, the ferrous salt was ferrous chloride, the lithium source was lithium acetate, and the phosphate was ammonium dihydrogen phosphate; the high-pressure atomizing spray gun had a nozzle size of 0.7 mm and an operation pressure of 0.1 MPa; the stirring speed of the high-speed stirring was 550 rpm; the pH value was adjusted to 6; and the temperature of the electric thermostatic blast oven was maintained for 9 h.

In S2, the melting temperature of rhamnose was 120 °C.

In S3, a molar ratio of a Li element in the lithium iron phosphate matrix to rhamnose to polyethylene glycol was 1:0.04:0.02; and the temperature of the first stage of sintering was 450 °C.

Example 2

This example was different from the below Example 3 in that:

In S1, the ferrous salt was ferrous chloride, the lithium source was lithium acetate, and the phosphate was ammonium dihydrogen phosphate; the high-pressure atomizing spray gun had a nozzle size of 0.6 mm and an operation pressure of 0.2 MPa; the stirring speed of the high-speed stirring was 650 rpm; the pH value was adjusted to 6; and the temperature of the electric thermostatic blast oven was maintained for 9 h.

In S2, the melting temperature of rhamnose was 130 °C.

In S3, a molar ratio of a Li element in the lithium iron phosphate matrix to rhamnose to polyethylene glycol was 1:0.04:0.02; and the temperature of the first stage of sintering was 450 °C.

Example 3

This example provided a lithium iron phosphate cathode material. A method for preparing the lithium iron phosphate cathode material included:

S1: Preparation of a lithium iron phosphate matrix

Ferrous acetate was weighed and dispersed into deionized water, and the above solution was purged with nitrogen for 1 h under the condition of stirring to remove dissolved oxygen in the solution so as to obtain a first solution. Lithium oxalate and ammonium hydrogen phosphate were weighed and dispersed into deionized water, and then stirred at a high speed under the protection of a nitrogen atmosphere at the stirring rate of 600 r/min so as to obtain a second solution. A molar ratio of a Li element in lithium oxalate to a Fe element in ferrous acetate to a P element in ammonium hydrogen phosphate was 1:1:0.95.

The first solution was poured into a high-pressure atomizing spray gun with a nozzle size of 0.5 mm and an operation pressure of 0.3 MPa to be atomized via a high-pressure nozzle, and then the atomized first solution was sprayed into the second solution being stirred at the high speed, so as to obtain a mixed solution. The pH value of an obtained mixed solution was adjusted to 7 with ammonia water, and further stirred for 30 min at room temperature under the protection of a nitrogen atmosphere. The mixed solution was transferred to a stainless steel autoclave with a polytetrafluoroethylene lining and preserved for 8 h in an electric thermostatic blast oven at 150 °C. After the reaction was completed, the product was cooled to room temperature and then filtered, and an obtained solid phase was subjected to centrifugal washing with deionized water and absolute ethyl alcohol in sequence, and finally dried for 12 h in a vacuum oven at 70 °C to obtain the lithium iron phosphate matrix.

S2: Preparation of a composite carbon source

Rhamnose was weighed, and heated to 135 °C in a high-temperature electric furnace for melting; polyethylene glycol powders were weighed, dissolved into dimethyl sulfoxide, and stirred evenly to obtain a mixed solution; the mixed solution was heated to 50 °C for water bath heating to obtain a polyethylene glycol gel; and the molten rhamnose was mixed with the polyethylene glycol gel to obtain the composite carbon source.

S3: Preparation of a lithium iron phosphate cathode material

The lithium iron phosphate matrix in S1 and the composite carbon source in S2 were subjected to ball milling for 1.5 h to obtain a mixed precursor; the mixed precursor was dried for 12 h in a vacuum oven at 100 °C, ground and smashed; and subsequently, the mixed precursor after being ground sufficiently was sintered in a muffle furnace filled with high-pure argon to obtain the lithium iron phosphate cathode material.

A molar ratio of the Li element in the lithium iron phosphate matrix to the rhamnose to the polyethylene glycol was 1:0.035:0.02.

The sintering process included: the temperature was raised to 400 °C at the rate of 5°C/min and maintained at this temperature for 2 h; and then the above temperature was further raised to 650 °C for roasting for 6 h.

Example 4

This example was different from Example 3 in that:

In S1, a molar ratio of a Li element in lithium oxalate to a Fe element in ferrous acetate to a P element in ammonium hydrogen phosphate was 1:1:1; the high-pressure atomizing spray gun had a nozzle size of 0.45 mm and an operation pressure of 0.3 MPa; and the stirring speed of the high-speed stirring was 700 rpm.

In S2, the carbon source was sorbitol, and the melting temperature of the sorbitol was 145 °C; and the water bath heating temperature of polyethylene glycol was 60 °C.

In S3, a molar ratio of a Li element in the lithium iron phosphate matrix to sorbitol to polyethylene glycol was 1:0.05:0.04; the first stage of the sintering was performed at temperature of 550 °C for 5 h; and the second stage of the sintering was performed at temperature of 750 °C for 8 h.

Example 5

This example was different from Example 3 in that:

In S1, the ferrous salt was ferrous chloride, the lithium source was lithium acetate, and the phosphate was ammonium dihydrogen phosphate; a molar ratio of a Li element in lithium acetate to a Fe element in ferrous chloride to a P element in ammonium dihydrogen phosphate was 1:1:1; the high-pressure atomizing spray gun had a nozzle size of 0.4 mm and an operation pressure of 0.35 MPa; the stirring speed of the high-speed stirring was 800 rpm; and the temperature of the electric thermostatic blast oven was maintained at 155 °C for 9 h.

In S2, the melting temperature of rhamnose was 150 °C; and the water bath heating temperature of the polyethylene glycol was 55 °C.

In S3, a molar ratio of a Li element in the lithium iron phosphate matrix to rhamnose to polyethylene glycol was 1:0.05:0.03; the first stage of sintering was performed at a temperature of 500 °C for 3 h; and the second stage of sintering was performed at a temperature of 700 °C for 7 h.

Example 6

This example was different from Example 3 in that:

In S1, the ferrous salt was ferrous chloride, the lithium source was lithium acetate, and the phosphate was ammonium dihydrogen phosphate; a molar ratio of a Li element in lithium acetate to a Fe element in ferrous chloride to a P element in ammonium dihydrogen phosphate was 1:1:1.1; the high-pressure atomizing spray gun had a nozzle size of 0.4 mm and an operation pressure of 0.35 MPa; the stirring speed of the high-speed stirring was 900 rpm; the pH value was adjusted to 8; and the temperature of the electric thermostatic blast oven was maintained at 160 °C for 9 h.

In S2, the melting temperature of rhamnose was 150 °C; and the water bath heating temperature of the polyethylene glycol was 60 °C.

In S3, a molar ratio of a Li element in the lithium iron phosphate matrix to rhamnose to polyethylene glycol was 1:0.05:0.025; the first stage of sintering was performed at a temperature of 500 °C for 3 h; and the second stage of sintering was performed for 7 h.

Example 7

This example was different from Example 3 in that:

In S1, the ferrous salt was ferrous chloride, the lithium source was lithium acetate, and the phosphate was ammonium dihydrogen phosphate; the first solution further contained nickel chloride; a ratio of a mole number of a Li element in lithium acetate to a total mole number of a Fe element in ferrous chloride and a Ni element in nickel chloride to a mole number of a P element in ammonium dihydrogen phosphate was 1:1:0.95, wherein, a molar ratio of the Fe element in ferrous chloride to the Ni element in nickel chloride was 0.985:0.015; the high-pressure atomizing spray gun had a nozzle size of 0.3 mm and an operation pressure of 0.35 MPa; the stirring speed of the high-speed stirring was 950 rpm; the pH value was adjusted to 8; and the temperature of the electric thermostatic blast oven was maintained at 170 °C for 9 h.

In S2, the carbon source was sorbitol, and the melting temperature of the sorbitol was 140 °C.

In S3, a molar ratio of a Li element in the lithium iron phosphate matrix to sorbitol to polyethylene glycol was 1:0.045:0.02; and the first stage of sintering was performed at a temperature of 450 °C.

Example 8

This example was different from Example 3 in that:

In S1, the ferrous salt was ferrous chloride, the lithium source was lithium acetate, and the phosphate was ammonium dihydrogen phosphate; the second solution further contained ammonium fluoride; a molar ratio of a Li element in lithium acetate to a Fe element in ferrous chloride to a P element in ammonium dihydrogen phosphate was 1:1:1; a molar ratio of an oxygen element in ammonium dihydrogen phosphate to a F element in ammonium fluoride was 3.998:0.002; the high-pressure atomizing spray gun had a nozzle size of 0.3 mm and an operation pressure of 0.4 MPa; the stirring speed of the high-speed stirring was 950 rpm; and the temperature of the electric thermostatic blast oven was maintained at 175 °C for 10 h.

In S2, the carbon source was sorbitol, and the melting temperature of the sorbitol was 145 °C; and the water bath heating temperature of polyethylene glycol was 55 °C.

In S3, a molar ratio of a Li element in the lithium iron phosphate matrix to sorbitol to polyethylene glycol was 1:0.05:0.02; the first stage of sintering was performed at a temperature of 480 °C for 3 h; and the second stage of sintering was performed at a temperature of 680 °C.

Example 9

This example was different from Example 3 in that:

In S1, the ferrous salt was ferrous chloride, the lithium source was lithium acetate, and the phosphate was ammonium dihydrogen phosphate; the second solution further contained sodium chloride; a ratio of a total mole number of a Li element in lithium acetate and a Na element in sodium chloride to a mole number of a Fe element in ferrous chloride to a mole number of a P element in ammonium dihydrogen phosphate was 1:1:0.95; a molar ratio of the Li element in lithium acetate to the Na element in sodium chloride was 0.985:0.015; the high-pressure atomizing spray gun had a nozzle size of 0.3 mm and an operation pressure of 0.4 MPa; the stirring speed of the high-speed stirring was 1000 rpm; and the temperature of the electric thermostatic blast oven was maintained at 180 °C for 10 h.

In S2, the carbon source was fructose, and the melting temperature of the fructose was 145 °C; and the water bath heating temperature of polyethylene glycol was 60 °C.

In S3, a molar ratio of a Li element in the lithium iron phosphate matrix to fructose to polyethylene glycol was 1:0.05:0.035; the first stage of sintering was performed at a temperature of 500 °C for 5 h; and the second stage of sintering was performed at a temperature of 750 °C for 8 h.

Example 10

This example was different from Example 3 in that: in the high-pressure atomizing step, the nozzle size was 0.4 mm, and the operation pressure was 0.4 MPa; the stirring speed of the high-speed stirring was 650 r/min; and the rest steps and conditions were unchanged.

Example 11

This example was different from Example 3 in that: the temperature of the electric thermostatic blast oven was maintained at 170 °C for 9 h; and the rest steps and conditions were unchanged.

Example 12

This example was different from Example 3 in that: the melting temperature of the carbon source was 150 °C, and the temperature of the gel water bath was 60 °C; and the rest steps and conditions were unchanged.

Example 13

This example was different from Example 3 in that: the first stage of sintering was performed at a temperature of 450 °C for 3 h, and the second stage of sintering was performed at a temperature of 700 °C for 7 h; and the rest steps and conditions were unchanged.

Example 14

This example was different from Example 3 in that: manganese chloride and ferric chloride were simultaneously dispersed into deionized water in a molar ratio of Fe to Mn of 0.985:0.015 to obtain a first solution; and the rest steps and conditions were unchanged.

Comparative Example 1

This comparative example was different from Example 3 in that:

In S1, a molar ratio of a Li element in lithium oxalate to a Fe element in ferrous acetate to a P element in ammonium dihydrogen phosphate was 1:1:1.1; the high-pressure atomizing spray gun had a nozzle size of 0.6 mm and an operation pressure of 0.2 MPa; the pH value was adjusted to 6; and the temperature of the electric thermostatic blast oven was maintained for 9 h.

In S2, the melting temperature of rhamnose was 100 °C.

In S3, a molar ratio of a Li element in the lithium iron phosphate matrix to rhamnose to polyethylene glycol was 1:0.03:0.02; the first stage of sintering was performed at a temperature of 350 °C; and the second stage of sintering was performed at a temperature of 650 °C.

Comparative Example 2

This comparative example was different from Example 3 in that: the preparation of the lithium iron phosphate matrix did not use the high-pressure atomization mixing method; instead, the materials were directly mixed before the reaction.
Specifically,
S1: Ferrous acetate, lithium oxalate and ammonium hydrogen phosphate were dispersed into deionized water in a molar ratio of Li:Fe:P=1:1:0.95, the mixed solution was purged with nitrogen for 30 min under the condition of stirring to remove dissolved oxygen in the solution, and then the solution after removing the dissolved oxygen was transferred to a stainless steel autoclave with a polytetrafluoroethylene lining and preserved for 8 h in an electric thermostatic blast oven at 150 °C; and after the reaction was completed, the product was cooled to room temperature and then filtered, a solid phase obtained after filtration was centrifugally washed with deionized water and absolute ethyl alcohol in sequence, and finally dried for 12 h in a vacuum oven at 70 °C to obtain a lithium iron phosphate precursor.
The steps and conditions in S2 and S2 were the same as those in Example 3.

Comparative Example 3

This comparative example was different from Example 3 in that: the carbon source was not molten, and was not compounded with the polyethylene glycol gel.
Specifically,
The steps and conditions in S1 were the same as those in Example 3.
S2: the lithium iron phosphate matrix and rhamnose (a molar ratio of a lithium element in the lithium iron phosphate matrix particle to rhamnose was 1:0.035) in S1 were dispersed in the absolute ethyl alcohol and then subjected to ball milling for 1.5 h to be evenly mixed to obtain a mixed precursor; the mixed precursor was dried for 12 h in a vacuum oven at 100 °C, and then ground and smashed; subsequently, the sufficiently ground precursor was sintered in a muffle furnace filled with high-pure argon, wherein the sufficiently ground precursor was heated to 400 °C at a rate of 5 °C/min and maintained at this temperature for 2 h, and then further heated to 650 °C for sintering for 6 h, to obtain the lithium iron phosphate cathode material.

Comparative Example 4

This comparative example was different from Example 3 in that: lithium iron phosphate was prepared by directly using a hydrothermal-high temperature calcination method.
Specifically, S1 in this comparative example was consistent with that in Comparative Example 2; S2 in this comparative example was basically consistent with that in Comparative Example 3 with the only difference being that the molar ratio of the lithium element in the lithium iron phosphate matrix to rhamnose was 1:0.05.

Test Example

(1) Performance testing was performed on the lithium iron phosphate cathode materials prepared in Examples 1-14 and Comparative Examples 1-4.

The performance testing method was as follows:

① The thickness of carbon coating layer, and carbon element content and distribution on the surface of the lithium iron phosphate cathode material were tested by using an FEI Tecnai F20 transmission electron microscope (TEM)-energy dispersive X-ray spectroscopy (EDX) combined apparatus. The microregions (local positions) selection was performed on a single lithium iron phosphate cathode material particle by using a TEM imaging system. High-resolution images of particle microregions were acquired by using the electron microscope with an objective aperture at a high magnification. Subsequently, the morphological image data of the particles was measured and analyzed by using an image acquisition system, to determine the thickness of coating layer of the selected microregions of the particles. Meanwhile, an EDX detector was combined to conduct qualitative and quantitative analysis of the carbon element distribution on the surface of the selected microregions of the particles. In the lithium iron phosphate cathode material sample, 10 cathode material particles were randomly selected as the sample size.

The calculation method of $\sigma(d)$ and $\sigma(C_{wt\%})$ was as follows:

$$\sigma(d) = \frac{\sum_{i=1}^{N_1} \sigma(d)_i}{N_1}, \sigma(C_{wt\%}) = \frac{\sum_{i=1}^{N_1} \sigma(C_{wt\%})_i}{N_1},$$

$N_1$ was the sample size of the lithium iron phosphate cathode material particle and its value was 10;

$$\sigma(d)_i = \sqrt{\frac{\sum_{m=1}^{n}(d_m - \bar{d})^2}{n-1}}, \sigma(C_{wt\%})_i = \sqrt{\frac{\sum_{m=1}^{n}(C_m - \bar{C})^2}{n-1}},$$

$n$ was the sample size of the local positions when the $i$-th lithium iron phosphate cathode material particle was tested, and its value was 5; $d_m$ was the thickness of the carbon coating layer of the lithium iron phosphate cathode material particle corresponding to the $m$-th local position selected, $\bar{d}$ was an average value of $d_m$ of 5 local position samples of the lithium iron phosphate cathode material particle in a unit of nm; $C_m$ was the carbon content of the lithium iron phosphate cathode material particle corresponding to the $m$-th position, $\bar{C}$ is an average value of $C_m$ of 5 local position samples of the lithium iron phosphate cathode material particle in a unit of wt%.

The lithium iron phosphate cathode material had a thickness of the carbon coating layer of $d = \frac{\sum_{i=1}^{N_1} \bar{d}_i}{N_1}$ and the carbon content of $C = \frac{\sum_{i=1}^{N_1} \bar{C}_i}{N_1}$.

②The microstructure of lithium iron phosphate cathode material particles was observed and their transmission electron microscope images (TEM two-dimensional projection images) were obtained by using an FEI Tecnai F20 transmission electron microscope. ImageJ software was used for shape analysis of the TEM two-dimensional projection images corresponding to the lithium iron phosphate cathode material particles, and parameters such as the two-dimensional projection area and the area of the smallest circumscribed circle of the projection of the lithium iron phosphate cathode material particles were collected. In the lithium iron phosphate cathode material sample, 10 cathode material particles were randomly selected as the sample size.

The calculation method of $\varphi$ was as follows: $\varphi = \frac{\sum_{j=1}^{N_2} \varphi_j}{N_2}$, $\varphi_j = \frac{D_s}{D}$, $\varphi_j$ was defined as the shape factor of the $j$-th lithium iron phosphate cathode material during the testing, specifically, $\varphi_j$ was a ratio of the diameter ($D_s$, μm) of a standard circle with an area equal to the two-dimensional projection area of the lithium iron phosphate cathode material particle to the diameter ($D$, μm) of the smallest circumscribed circle of the two-dimensional projection of the lithium iron phosphate cathode material particle in the TEM two-dimensional projection image of the lithium iron phosphate cathode material particle; and $N_2$ was the sample size of the tested lithium iron phosphate cathode material particle, and the value was 10.

③ Specific surface area (BET) testing: Static volumetric method-based isothermal adsorption-desorption analysis was performed using a Micromeritics ASAP2460 automatic specific surface area analyzer, and the specific surface area of the lithium iron phosphate cathode material was determined by measuring the adsorption-desorption behavior of the lithium iron phosphate cathode material on nitrogen, and the unit was $m^2/g$.

④ Particle size: the particle size of lithium iron phosphate cathode material was tested using a GSL-101BI laser particle size analyzer.

⑤ Carrier mobility testing: the carrier mobility of the lithium iron phosphate cathode material was tested using an HMS-7000 Hall effect tester. The carrier mobility was an important parameter for measuring the electrical conductivity of materials, which characterized the transport rate of carriers (electrons and holes) in the interior and on the surface of the lithium iron phosphate cathode material under the action of a unit electric field, and the unit was $cm^2/V \cdot s$.

⑥ Electrochemical performance testing

A. Preparation of an electrode and assembling of a button type battery: the lithium iron phosphate cathode material, a conductive agent acetylene black and a binder polyvinylidene fluoride were evenly mixed in N-methylpyrrolidone in a mass ratio of 92:4:4 to prepare a slurry; the slurry was coated onto an aluminum foil, dried in a vacuum drying oven, and then pressed into a cathode electrode sheet using a tablet press; and a button type battery comprising a metal lithium sheet served as an anode sheet, 1 mol/L lithium hexafluorophosphate-ethylene carbonate (EC): dimethyl carbonate (DMC) (in a volume ratio, V(EC):V(DMC) = 1:1) served as an electrolytic solution, a polypropylene porous membrane served as a separator was assembled in an argon glove box.

B. Electrochemical performance testing: the electrochemical performance testing was performed on the assembled button type battery within a charge-discharge voltage range of 2.5 V-4.5 V. First, the battery was charged to 4.5 V at a constant current and then discharged to 2.5 V at a rate current, the discharged capacity obtained was the discharge capacity at this rate. After discharge was completed, the battery was further discharged to 2.5 V at a constant current, followed by testing at the next rate.

⑦ Yield strength test of an electrode: a universal testing machine equipped with a video extensometer and special pneumatic foil fixtures was used to test the yield strength of a lithium iron phosphate electrode sheet (unit: MPa, the stress value causing 0.2% residual deformation was generated) to evaluate the influence of the micro morphology of the lithium iron phosphate particles and the influence of the surface carbon coating of the lithium iron phosphate particles on the mechanical strength of the electrode. The prepared electrode was clamped with special pneumatic foil fixtures, with the fixture air pressure set between 0.4 MPa and 0.6 MPa. A tensile test was then performed, and the deformation of the electrode sheet during stretching was measured using a video extensometer.

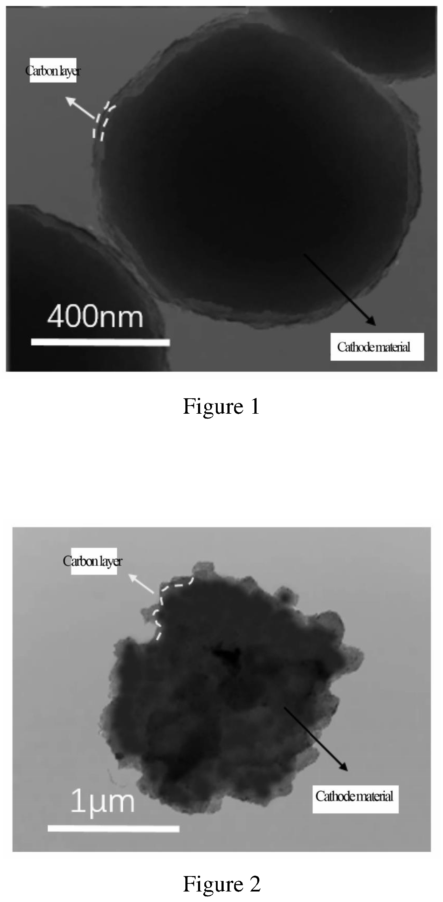

The above performance testing results are as shown in Table 1, Table 2, Figure 1 and Figure 2.

Table 1 Test results

| Sample number | Chemical formula | $\varphi$ | d, nm | $\sigma(d)$, nm | C, wt% | $\sigma(C_{wt\%})$ | Parameter factor $Q$, $nm^{-1}$ |
|---|---|---|---|---|---|---|---|
| Example 1 | $LiFePO_4$ | 0.436 | 3.0 | 0.343 | 3.75 | 0.336 | 0.038 |
| Example 2 | $LiFePO_4$ | 0.550 | 2.7 | 0.338 | 3.47 | 0.325 | 0.050 |
| Example 3 | $LiFePO_4$ | 0.673 | 1.5 | 0.310 | 1.95 | 0.301 | 0.072 |
| Example 4 | $LiFePO_4$ | 0.761 | 9.1 | 0.112 | 9.68 | 0.105 | 0.648 |
| Example 5 | $LiFePO_4$ | 0.858 | 6.3 | 0.063 | 7.55 | 0.040 | 3.405 |
| Example 6 | $LiFePO_4$ | 0.907 | 5.5 | 0.055 | 6.25 | 0.024 | 6.596 |
| Example 7 | $LiFe_{0.985}Ni_{0.015}PO_4$ | 0.880 | 3.8 | 0.210 | 4.75 | 0.204 | 0.205 |
| Example 8 | $LiFePO_{3.998}F_{0.002}$ | 0.893 | 4.6 | 0.136 | 5.15 | 0.130 | 0.505 |
| Example 9 | $Li_{0.985}Na_{0.0015}FePO_4$ | 0.910 | 8.7 | 0.101 | 9.23 | 0.089 | 1.012 |
| Example 10 | $LiFePO_4$ | 0.712 | 1.6 | 0.304 | 1.97 | 0.296 | 0.079 |
| Example 11 | $LiFePO_4$ | 0.695 | 1.6 | 0.308 | 1.98 | 0.298 | 0.076 |
| Example 12 | $LiFePO_4$ | 0.670 | 1.5 | 0.116 | 1.96 | 0.107 | 0.540 |

(continued)

| Sample number | Chemical formula | $\varphi$ | $d$, nm | $\sigma(d)$, nm | $C$, wt% | $\sigma(C_{wt\%})$ | Parameter factor $Q$, nm$^{-1}$ |
|---|---|---|---|---|---|---|---|
| Example 13 | $LiFePO_4$ | 0.677 | 1.7 | 0.254 | 1.99 | 0.240 | 0.111 |
| Example 14 | $LiFe_{0.985}Mn_{0.015}PO_4$ | 0.702 | 1.5 | 0.314 | 1.94 | 0.306 | 0.074 |
| Comparative example 1 | $LiFePO_4$ | 0.530 | 2.1 | 0.383 | 2.56 | 0.371 | 0.037 |
| Comparative example 2 | $LiFePO_4$ | 0.310 | 1.6 | 0.360 | 1.99 | 0.352 | 0.024 |
| Comparative example 3 | $LiFePO_4$ | 0.505 | 1.5 | 0.950 | 1.92 | 1.105 | 0.005 |
| Comparative example 4 | $LiFePO_4$ | 0.305 | 4.2 | 0.975 | 4.83 | 1.330 | 0.002 |

Table 2 Testing results

| Sample number | BET, m$^2$/g | $D_{50}$, $\mu$m | Carrier mobility, $\times 10^{-6}$ cm$^2$/V s | Yield strength of the electrode, Mpa | 0.1C Initial discharge specific capacity, mAh/g | 1C | |
|---|---|---|---|---|---|---|---|
| | | | | | | Initial discharge specific capacity, mAh/g | Discharge capacity retention rate for 50 cycles, % |
| Example 1 | 9.3 | 1.50 | 20.03 | 30 | 149.5 | 143.2 | 95.77 |
| Example 2 | 10.2 | 1.35 | 20.20 | 31 | 151.6 | 145.5 | 96.82 |
| Example 3 | 11.7 | 1.16 | 20.26 | 32 | 154.2 | 148.4 | 98.02 |
| Example 4 | 13.2 | 1.00 | 21.38 | 34 | 157.2 | 151.2 | 98.69 |
| Example 5 | 14.3 | 0.90 | 21.05 | 39 | 158.4 | 152.5 | 98.98 |
| Example 6 | 15.1 | 0.85 | 20.86 | 40 | 161.6 | 155.2 | 99.35 |
| Example 7 | 12.4 | 1.07 | 20.50 | 35 | 156.0 | 150.5 | 98.38 |
| Example 8 | 12.8 | 1.04 | 20.62 | 36 | 156.6 | 150.8 | 98.50 |
| Example 9 | 13.7 | 0.96 | 21.71 | 35 | 157.7 | 151.8 | 98.76 |
| Example 10 | 12.1 | 1.10 | 20.33 | 32 | 154.8 | 148.9 | 98.22 |
| Example 11 | 11.9 | 1.14 | 20.29 | 32 | 154.6 | 148.7 | 98.15 |
| Example 12 | 12.3 | 1.08 | 20.60 | 36 | 156.3 | 150.2 | 98.25 |
| Example 13 | 12.6 | 1.06 | 20.42 | 33 | 155.2 | 149.3 | 98.30 |
| Example 14 | 12.0 | 1.12 | 20.30 | 32 | 154.4 | 148.5 | 98.10 |
| Comparative example 1 | 8.6 | 1.76 | 19.92 | 29 | 148.2 | 142.4 | 94.14 |
| Comparative example 2 | 8.0 | 1.88 | 19.97 | 24 | 147.1 | 138.2 | 94.31 |
| Comparative example 3 | 9.1 | 1.65 | 14.65 | 18 | 142.7 | 133.5 | 91.57 |
| Comparative example 4 | 7.6 | 1.97 | 15.08 | 16 | 140.8 | 130.6 | 90.65 |

As can be seen from Figure 1, the lithium iron phosphate cathode material in Example 6 of the present disclosure has a regular morphology and a uniform thin carbon coating layer; and Figure 2 shows the lithium iron phosphate material in Comparative Example 4 is irregular in morphology and non-uniform in surface carbon coating layer, which is not conducive to the improvement of the cathode material.

As can be seen from data in Table 1 and Table 2, the lithium iron phosphate cathode materials provided in examples satisfy 0.05 nm$\leq\sigma(d)\leq$0.35 nm and 0.02 wt%$\leq\sigma(C_{wt\%})\leq$ 0.35 wt% provided in the present disclosure, which have higher carrier mobility and conductivity than those in comparative examples, etc., and help to further improve the electrochemical performances (such as specific capacity, rate and cycle performance) of the battery prepared from the lithium iron phosphate cathode material.

As can be seen from data in Table 1, all the $\varphi$, $\sigma(d)$ and $\sigma(C_{wt\%})$ values may affect the parameter factor $Q$ value of the lithium iron phosphate cathode material.

As can be seen from Examples 1-9, when the larger the $\varphi$ of the lithium iron phosphate cathode material particle, i.e., the closer it is to 1, the better the morphology regularity of the lithium iron phosphate cathode material particle; the smaller the $\sigma(d)$ and $\sigma(C_{wt\%})$, the more uniform the carbon coating layer of the lithium iron phosphate cathode material particle, at this moment, the obtained parameter factor $Q$ value is relatively large, and the parameter factor $Q$ may affect the comprehensive electrochemical performance of the lithium battery prepared from the lithium iron phosphate cathode material to a certain degree. Typically, the lithium iron phosphate cathode material with a regular morphology has good dispersibility, and may improve the compacted density of the lithium iron phosphate cathode material and reduce the inner resistance of the battery; the homogeneous conductive carbon coating layer may effectively reduce the side reactions between the lithium iron phosphate cathode material and the electrolytic solution and improve the diffusion and conduction of electrons and lithium ions, both of which may improve the electrochemical performance of the battery prepared from the corresponding lithium iron phosphate cathode material.

As can be comprehensively seen from data in Table 1 and Table 2, even though the lithium iron phosphate cathode material has the same chemical composition, it also correspondingly has different $\varphi$, $\sigma(d)$ and $\sigma(C_{wt\%})$ values, which then will has different parameter factor $Q$ values. When the parameter factor $Q$ value is in a range of 0.07 nm$^{-1}$-7 nm$^{-1}$, and $\varphi$, $\sigma(d)$ and $\sigma(C_{wt\%})$ are also in the range provided herein ($\varphi$ is 0.5-1, $\sigma(d)$ is 0.05 nm-0.35 nm, and $\sigma(C_{wt\%})$ is 0.02 wt%-0.35 wt%), at this moment, the electrode of the battery prepared from the corresponding lithium iron phosphate cathode material has good yield strength, relatively high specific capacity and relatively excellent rate performance and cycle performance.

In Example 1, only $\sigma(d)$ is in a range of 0.05 nm-0.35 nm, and $\sigma(C_{wt\%})$ is in a range of 0.02 wt%-0.35 wt%, the electrochemical performance of the battery and the yield strength of the electrode prepared from the corresponding lithium iron phosphate cathode material are inferior to those in other examples. In Example 2, $\varphi$ is in a range of 0.5-1, $\sigma(d)$ is in a range of 0.05 nm-0.35 nm and $\sigma(C_{wt\%})$ is in a range of 0.02 wt%-0.35 wt%, but the parameter factor $Q$ is not in a range of 0.07 nm$^{-1}$-7 nm$^{-1}$, the electrochemical performance of the battery and the yield strength of the electrode prepared from the corresponding the lithium iron phosphate cathode material are improved compared within those in Example 1 but are inferior to those in Examples 3-14. In Examples 3-9, $\varphi$ is in a range of 0.5-1, $\sigma(d)$ is in a range of 0.05 nm-0.35 nm, $\sigma(C_{wt\%})$ is in a range of 0.02 wt%-0.35 wt%, and $Q$ is in a range of 0.07 nm$^{-1}$-7 nm$^{-1}$, and the electrochemical performance of the battery and the yield strength of the electrode prepared from the corresponding lithium iron phosphate cathode material are both significantly improved compared with those in Examples 1-2.

Furthermore, when the parameter factor $Q$ values of the lithium iron phosphate cathode materials in Examples 3-9 are relatively high, the electrochemical performance of the battery prepared from the corresponding lithium iron phosphate cathode material is better, at this moment, the lithium iron phosphate cathode material particle has relatively regular morphology and relatively uniform carbon coating layer, which is conducive to quickening the intercalation/deintercalation rate of the lithium ions, shortening the transportation and diffusion path of the lithium ions, enhancing the conductivity of the lithium iron phosphate cathode material, and preventing the side reaction between the lithium iron phosphate cathode material and the electrolytic solution, thereby improving the charging and discharging performance of the lithium ion battery.

In addition, the yield strength of the electrode prepared from the corresponding lithium iron phosphate cathode material is jointly determined by the micro morphology and carbon coating layer of the material particle. A proper carbon content, regular particle morphology and uniform carbon coating layer are conducive to increasing the compacted density of the lithium iron phosphate cathode material particles, thereby improving the yield strength of the electrode prepared from the lithium iron phosphate cathode material and enhancing the mechanical properties of the electrode. As can be seen from the data, except Example 4 and Example 9, the yield strength values of electrode prepared from the corresponding lithium iron phosphate cathode materials in other examples increase with an increase in the parameter factor $Q$ value; relatively, the parameter factor $Q$ values in Example 4 and Example 9 are in a range of 0.07 nm$^{-1}$-7 nm$^{-1}$, but the lithium iron phosphate cathode materials are slightly high in surface carbon contents and many in amorphous carbon generated after high-temperature carbonization, which may reduce the compacted density of the lithium iron phosphate cathode material to a certain degree, thereby affecting the yield strength of the electrode prepared from the lithium iron phosphate cathode material.

In addition, the lithium iron phosphate cathode materials prepared in examples have relatively excellent carrier mobility, indicating that electron in the interior and on the surface of the lithium iron phosphate cathode material have relatively quick movement speed in a unit area field, and also further reflecting that the carbon coating layer has relatively good uniformity on the surface of the matrix. As can be seen from Examples 3-4, Examples 8-9 and Example 6-7, when the lithium iron phosphate cathode material has smaller $\sigma(d)$ and $\sigma(C_{wt\%})$ values and higher carbon content ($C$, wt%), the lithium iron phosphate cathode material has higher carrier mobility, indicating that the lithium iron phosphate cathode material has better conductivity and facilitating the improvement of charging and discharging performance of the lithium battery. Moreover, under the condition that the carbon content and $\sigma(d)$ as well as $\sigma(C_{wt\%})$ values are not significantly different, the apparent carrier mobility in Example 9 is slightly higher than that in Example 4, which is related to lithium iron phosphate lattice defects caused by element doping.

In addition, it may be seen from comparison between Examples 1-9 and Comparative Example 1 that $\sigma(d)$ and $\sigma(C_{wt\%})$ values in Comparative Example 1 are not in the range provided in the present disclosure, although the $\varphi$ value is in the range provided in the present disclosure, the apparent carrier mobility, electrochemical performance and electrode yield strength of the corresponding lithium iron phosphate cathode material are all relatively poor. Therefore, when $\varphi$, $\sigma(d)$, $\sigma(C_{wt\%})$ and $Q$ are all in the range provided in the present disclosure, each performance index of the obtained lithium iron phosphate cathode material is more excellent.

As can be seen from Example 3, Comparative Example 2 and Comparative Example 4, if the preparation process does not use high-pressure atomization mixing method, the $\varphi$ values in Comparative Example 2 and Comparative Example 4 are relatively small and are significantly different from that in Example 3, showing that the lithium iron phosphate cathode materials prepared in Comparative Example 2 and Comparative Example 4 have poor shape regularity, and the parameter factor $Q$ values in Comparative Example 2 and Comparative Example 4 are relatively small, and the comprehensive electrochemical performances of the lithium iron phosphate cathode materials are also relatively low; the shape factor $\varphi$ value of the lithium iron phosphate cathode material prepared in Example 3 is relatively large (less than 1), showing that the lithium iron phosphate cathode material has relatively regular particle morphology, which benefits from a fact that the high-pressure atomization-high speed stirring and mixing operation method provides seed crystals with uniform particle size and homogeneous morphology for the generation of the lithium iron phosphate cathode material; and after hydrothermal reaction at an appropriate temperature, lithium iron phosphate precursor particles with good crystalline and regular and uniform morphology are obtained, and the electrochemical performance of the battery prepared from the corresponding lithium iron phosphate cathode material is also relatively excellent.

Compared with Example 3, in the high-pressure atomization mixing step in Example 10, the nozzle size is relatively small, the operation pressure is relatively large and the mixing and stirring speed is relatively quick, which is advantageous for obtaining seed crystal precursor with a relatively small particle size; the lithium iron phosphate precursor particle prepared by hydrothermal reaction is relatively large in specific surface area and relatively good in shape regularity, which helps to shortening the diffusion path of the lithium ions, improving the intercalation/deintercalation rate of the lithium ions, thereby enhancing the charging and discharging performance of the battery prepared from the corresponding lithium iron phosphate cathode material.

Compared with Example 3, the lithium iron phosphate cathode material in Example 11 has an improved particle shape regularity and a slightly reduced particle size. This is because an increase in synthesis temperature makes interaction between reactants become strong in an appropriate reaction temperature range, which may accelerate the growth process of crystals, and meanwhile the relatively high temperature may provide enough energy to overcome energy barrier required for formation of relatively small particles, leading to a smaller particle size and a more regular shape of the formed crystals, and then facilitating the improvement of the electrochemical performance of the battery prepared from the corresponding lithium iron phosphate cathode material.

Compared with Example 3, the shape factor $\varphi$ value of the lithium iron phosphate cathode material prepared in Example 14 increases. This is because an appropriate amount of element doping may not only form crystal defects such as holes to reduce the resistance for intercalation/deintercalation of lithium ions in the lattices of lithium iron phosphate, but also inhibit the growth of crystals in some crystal orientations or crystal planes, thereby further playing roles in regulating the particle size and morphology of the lithium iron phosphate particles so as to obtain lithium iron phosphate with better morphology regularity and larger specific surface area, which is conducive to improving the electrochemical performance of the battery prepared from the corresponding lithium iron phosphate cathode material.

As can be seen from Example 3, Comparative Example 3 and Comparative Example 4, if the carbon source is neither molten nor compounded with the polyethylene glycol gel when the lithium iron phosphate is calcined at a high temperature during the preparation, the $\sigma(d)$ and $\sigma(C_{wt\%})$ values of the lithium iron phosphate cathode materials prepared in Comparative Examples 3 and 4 are relatively large (more than 0.9), showing that the coating uniformity of the carbon coating layer of the cathode material has relatively poor uniformity, and therefore the apparent carrier mobility value of the material is relatively low, the obtained parameter factor $Q$ value is also relatively small, and the comprehensive performance of the cathode material is relatively low; and the $\sigma(d)$ and $\sigma(C_{wt\%})$ values of the lithium iron phosphate cathode material prepared in Example 3 are smaller (less than 0.35), showing that the coating uniformity of the carbon coating layer of the cathode material is relatively good, which benefits from co-infiltration coating with a composite carbon source composed of a molten carbon source and the polyethylene glycol gel, thereby helping to further improving the electrochemical performance of the lithium iron phosphate cathode material.

Compared with Example 3, the $\sigma(d)$ and $\sigma(C_{wt\%})$ values of the lithium iron phosphate cathode material in Example 12 obviously decrease, showing that the uniformity of the carbon coating layer on the lithium iron phosphate matrix is improved. This is because the higher water bath temperature advantageously increases the strength and swelling characteristic of the polyethylene glycol gel in an appropriate temperature range, and the higher melting temperature advantageously increases the flowability of the liquid carbon source; and after the lithium iron phosphate matrix is mixed with the composite carbon source, the molten carbon source with high flowability is conducive to being uniformly and stably coated on the surface of the lithium iron phosphate matrix by high-strength polyethylene glycol, thereby improving the uniformity of the carbon coating layer.

Compared with Example 3, the $\sigma(d)$ and $\sigma(C_{wt\%})$ values of the lithium iron phosphate cathode material in Example 13 decrease, and the thickness of the carbon coating layer slightly increases. This is because the relatively high sintering temperature is conducive to forming a more stable continuous and tight carbon coating layer structure in a certain temperature range, thereby improving the coating uniformity and promoting the diffusion of lithium ions and the conduction of electrons; furthermore, the relatively high sintering temperature may promote the quick sintering of the carbon coating layer to a certain degree, thereby forming a relatively thick carbon layer. The relatively low $\sigma(d)$ and $\sigma(C_{wt\%})$ values indicate that the coating of the carbon coating layer on the surface of the lithium iron phosphate matrix is relatively uniform, which is conducive to improving the electrochemical performance of the battery prepared from the corresponding lithium iron phosphate cathode material.

In summary, the lithium iron phosphate cathode material provided in the present disclosure has a regular particle morphology and a uniform carbon coating layer, which is conducive to improving the carrier mobility, conductivity and the like of the lithium iron phosphate cathode material, and further helps to improve the electrochemical performance (such as specific capacity, rate and cycle performance) of the battery prepared from the lithium iron phosphate cathode material.

**Industrial applicability**

The lithium iron phosphate cathode material provided in the present disclosure has a regular particle morphology and a uniform carbon coating layer, which is conducive to improving the carrier mobility, conductivity and the like of the lithium iron phosphate cathode material, and further helps to improve the electrochemical performance (such as specific capacity, rate and cycle performance) of the battery prepared from the lithium iron phosphate cathode material.

**Claims**

1.  A lithium iron phosphate cathode material, comprising a lithium iron phosphate matrix and a carbon coating layer coated on a surface of the lithium iron phosphate matrix;

    wherein an average standard deviation of a thickness of the carbon coating layer of the lithium iron phosphate cathode material is $\sigma(d)$, $\sigma(d) = \frac{\sum_{i=1}^{N_1} \sigma(d)_i}{N_1}$, and 0.05 nm$\leq\sigma(d)\leq$0.35 nm;

    wherein an average standard deviation of a carbon content of the lithium iron phosphate cathode material is $\sigma(C_{wt\%})$, $\sigma(C_{wt\%}) = \frac{\sum_{i=1}^{N_1} \sigma(C_{wt\%})_i}{N_1}$, and 0.02 wt%$\leq\sigma(C_{wt\%})\leq$0.35 wt%;

    wherein $N_1$ is a sample size of lithium iron phosphate cathode material particles when the lithium iron phosphate cathode material is tested, and $N_1\geq$10;

    wherein $\sigma(d)_i$ and $\sigma(C_{wt\%})_i$ are a standard deviation of a thickness of the carbon coating layer and a standard deviation of a carbon content of an $i$-th lithium iron phosphate cathode material particle when the lithium iron phosphate cathode material is tested, respectively;

    wherein $\sigma(d)_i = \sqrt{\frac{\sum_{m=1}^{n}(d_m - \bar{d})^2}{n-1}}$, $\sigma(C_{wt\%})_i = \sqrt{\frac{\sum_{m=1}^{n}(C_m - \bar{C})^2}{n-1}}$, $n$ is a sample size of local positions of the $i$-th lithium iron phosphate cathode material particle during the testing, $n\geq$5; $d_m$ is a thickness of a carbon coating layer corresponding to a $m$-th local position, $\bar{d}$ is an average value of $d_m$ of $n$ local position samples in a unit of nm; and $C_m$ is a carbon content corresponding to the $m$-th local position, and $\bar{C}$ is an average value of $C_m$ of $n$ local position samples in a unit of wt%;

    wherein the thickness of the carbon coating layer of the lithium iron phosphate cathode material is $d$, $d = \frac{\sum_{i=1}^{N_1} \bar{d}_i}{N_1}$, and 1 nm$\leq d\leq$10 nm; and $\bar{d}_i$ is an average value of $d_m$ of $n$ local position samples of the $i$-th lithium iron phosphate cathode material particle; and

    wherein the carbon content of the lithium iron phosphate cathode material is $C$, $C = \frac{\sum_{i=1}^{N_1} \bar{C}_i}{N_1}$, and 1 wt%$\leq C\leq$10

wt%; and $\overline{C_i}$ is an average value of $C_m$ of $n$ local position samples of the $i$-th lithium iron phosphate cathode material particle.

2. The lithium iron phosphate cathode material according to claim 1, wherein a shape factor of the lithium iron phosphate cathode material is $\varphi$, $\varphi = \frac{\Sigma_{j=1}^{N_2} \varphi_j}{N_2}$, and $0.5 \leq \varphi \leq 1$;

wherein $N_2$ is a sample size of lithium iron phosphate cathode material particles when the lithium iron phosphate cathode material is tested, and $N_2 \geq 10$;

wherein $\varphi_j$ is a shape factor of a $j$-th lithium iron phosphate cathode material particle when the lithium iron phosphate cathode material is tested; and

wherein $\varphi_j = \frac{D_s}{D}$, $D_s$ is a diameter of a standard circle with an area equal to a projected area in a transmission electron microscope (TEM) two-dimensional projection image of the $j$-th lithium iron phosphate cathode material particle, and $D$ is a diameter of a smallest circumscribed circle of a particle projection in the TEM two-dimensional projection image of the $j$-th lithium iron phosphate cathode material particle.

3. The lithium iron phosphate cathode material according to claim 2, wherein a parameter factor $Q$ of the lithium iron phosphate cathode material satisfies $Q = \frac{\varphi}{\sigma(d) \times \sigma(C_{wt\%}) \times 100}$, and $0.07 \text{ nm}^{-1} \leq Q \leq 7 \text{ nm}^{-1}$.

4. The lithium iron phosphate cathode material according to any one of claims 1-3, wherein the lithium iron phosphate cathode material further comprises at least one of the following features:

feature 1: the $\varphi$ of the lithium iron phosphate cathode material is 0.550-0.910;
feature 2: the $d$ of the lithium iron phosphate cathode material is 1.5 nm-9.1 nm;
feature 3: the $\sigma(d)$ of the lithium iron phosphate cathode material is 0.055 nm-0.343 nm;
feature 4: the $C$ of the lithium iron phosphate cathode material is 1.94 wt% -9.68 wt%;
feature 5: the $\sigma(C_{wt\%})$ of the lithium iron phosphate cathode material is 0.024 wt%-0.336 wt%;
feature 6: the $Q$ of the lithium iron phosphate cathode material is 0.072 nm$^{-1}$-6.596 nm$^{-1}$;
feature 7: a specific surface area of the lithium iron phosphate cathode material is 9.3 m$^2$/g-15.1 m$^2$/g;
feature 8: a $D_{50}$ of the lithium iron phosphate cathode material is 0.85 $\mu$m-1.50 $\mu$m;
feature 9: a carrier mobility of the lithium iron phosphate cathode material is 20.03 $\times 10^{-6}$ cm$^2$/V s-21.71 $\times 10^{-6}$ cm$^2$/V ·s; and
feature 10: a general formula of the lithium iron phosphate matrix is $Li_{1-x}A_xFe_{1-y}M_y(PO_{4-a})D_a$, wherein A comprises at least one of Na and Mg; M comprises at least one of Al, Ni, Co, Mn, Ti, La, Ce, Cr, Mo, Ca, Ga, V, Nb, Zr, In, Zn and Y; D comprises at least one of F and S; and $0 \leq x \leq 0.1$, $0 \leq y \leq 0.1$ and $0 \leq a \leq 0.1$.

5. A method for preparing the lithium iron phosphate cathode material according to any one of claims 1-4, comprising the following steps: performing ball milling on a lithium iron phosphate matrix and a composite carbon source to obtain a mixed precursor; and drying and sintering the mixed precursor in sequence to obtain the lithium iron phosphate cathode material.

6. The method according to claim 5, wherein the preparation of the lithium iron phosphate cathode material comprises at least one of the following features:

feature 11: a preparation of the lithium iron phosphate matrix comprising: mixing a first solution containing a ferrous salt with a second solution containing a lithium source and phosphate to obtain a mixed solution; and adjusting a pH value of the mixed solution to 6-8 followed by hydrothermal reaction, and then collecting a solid after the reaction is completed;
feature 12: a preparation of the composite carbon source comprising: mixing a polyethylene glycol gel with a molten carbon source, wherein the carbon source comprises at least one of sorbitol, erythritol, fructose, rhamnose and malic acid; a molar ratio of a lithium element in the lithium iron phosphate matrix to the carbon source to the polyethylene glycol is 1:0.03-0.05:0.02-0.04;
feature 13: the ball milling is performed for 1 h-2 h;
feature 14: the mixed precursor is dried at a temperature of 90 °C-110 °C;
feature 15: the mixed precursor is dried for 10 h-14 h; and

feature 16: the sintering comprising: performing sintering at a temperature of 400 °C-550 °C and maintaining at this temperature for 2 h-5 h, and then performing sintering at a temperature of 650 °C-750 °C and maintaining at this temperature for 6 h-8 h.

7. The method according to claim 6, wherein the preparation of the lithium iron phosphate matrix comprises at least one of the following conditions:

condition 1: a general formula of the lithium iron phosphate matrix is $Li_{1-x}A_xFe_{1-y}M_y(PO_{4-a})D_a$, wherein when the lithium iron phosphate matrix contains M, A and D elements, the first solution further contains an M source, and the second solution further contains an A source and a D source;
condition 2: the first solution is sprayed into the second solution under a condition of stirring via high-pressure atomization; or, the second solution is sprayed into the first solution under a condition of stirring via high-pressure atomization;
condition 3: the hydrothermal reaction is performed at a temperature of 150 °C-180 °C; and
condition 4: the hydrothermal reaction is performed for 8 h-10 h.

8. The method according to claim 7, wherein the ferrous salt comprises at least one of ferrous oxalate, ferrous chloride and ferrous acetate; or,

the lithium source comprises at least one of lithium oxalate, lithium chloride and lithium acetate; or,
the phosphate comprises at least one of ammonium dihydrogen phosphate and ammonium hydrogen phosphate; or,
the M source is a water-soluble salt of a M element; or,
the A source comprises at least one of sodium fluoride, magnesium fluoride, sodium chloride, magnesium chloride and sodium sulfide; or,
the D source comprises at least one of ammonium fluoride, lithium fluoride, ammonium sulfide, lithium sulfide, ammonium bisulfite and thiourea; or,
a molar ratio of a total mole number of an iron element in the ferrous salt and the M element in the M source to a total mole number of the lithium element in the lithium source and a A element in the A source to a mole number of a P element in the phosphate is 1:1:0.95-1.1, wherein a molar ratio of the lithium element to the A element is 0.9-1:0-0.1; a molar ratio of the iron element to the M element is 0.9-1:0-0.1; and a molar ratio of an oxygen element in the phosphate to a D element in the D source is 3.9-4:0-0.1; or,
a high-pressure atomizing spray gun used for high-pressure atomization has a nozzle diameter of 0.3 mm-0.6 mm and an operation pressure of 0.2 MPa-0.4 MPa; or,
a stirring rate of the stirring condition is 600 r/min-1000 r/min.

9. A cathode electrode sheet, wherein an active material of the cathode electrode sheet comprises the lithium iron phosphate cathode material according to any one of claims 1-4.

10. A battery, comprising the cathode electrode sheet according to claim 9.

Figure 1

Figure 2

## INTERNATIONAL SEARCH REPORT

| International application No. |
|---|
| **PCT/CN2025/103167** |

| A. | CLASSIFICATION OF SUBJECT MATTER |
|---|---|

H01M4/36(2006.01)i; H01M4/62(2006.01)i; H01M4/58(2010.01)i; H01M10/0525(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS, CNTXT, WPABS, VEN, ENTXT, CNKI: 磷酸铁锂, 碳层, 包覆, 厚度, 均匀, 高压喷雾, 高速搅拌, 熔融, lithium iron phosphate, LiFePO4, carbon layer, coat, thickness, uniformity, high pressure spraying, high speed stiring, melt

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 119230802 A (GUANGDONG BRUNP RECYCLING TECHNOLOGY CO., LTD.) 31 December 2024 (2024-12-31) description, paragraphs 23-86 | 1-10 |
| A | CN 114930580 A (TORAY INDUSTRIES, INC.) 19 August 2022 (2022-08-19) description, paragraphs 18-67 | 1-10 |
| A | CN 102420324 A (SHANGHAI ZHONGXING PYLON ENERGY TECHNOLOGY CO., LTD.) 18 April 2012 (2012-04-18) description, paragraphs 6-29 | 1-10 |
| A | CN 108376775 A (CHENGDU NEW KELI CHEMICAL SCIENCE CO., LTD.) 07 August 2018 (2018-08-07) entire document | 1-10 |
| A | JP 2011233438 A (GS YUASA CORP.) 17 November 2011 (2011-11-17) entire document | 1-10 |

☐ Further documents are listed in the continuation of Box C.       ☑ See patent family annex.

| * | Special categories of cited documents: | | "T" | later document published after the international filing date or priority date and not in conflict with the application but cited to understand the principle or theory underlying the invention |
|---|---|---|---|---|
| "A" | document defining the general state of the art which is not considered to be of particular relevance | | | |
| "D" | document cited by the applicant in the international application | | "X" | document of particular relevance; the claimed invention cannot be considered novel or cannot be considered to involve an inventive step when the document is taken alone |
| "E" | earlier application or patent but published on or after the international filing date | | | |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search | Date of mailing of the international search report |
|---|---|
| **25 September 2025** | **01 October 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2025/103167** |

| Patent document cited in search report | | | Publication date (day/month/year) | Patent family member(s) | | | Publication date (day/month/year) |
| --- | --- | --- | --- | --- | --- | --- | --- |
| CN | 119230802 | A | 31 December 2024 | CN | 119230802 | B | 27 May 2025 |
| CN | 114930580 | A | 19 August 2022 | JP | 7654979 | B2 | 02 April 2025 |
| | | | | EP | 4099447 | A1 | 07 December 2022 |
| | | | | US | 2023050890 | A1 | 16 February 2023 |
| | | | | WO | 2021153007 | A1 | 05 August 2021 |
| | | | | TW | 202130016 | A | 01 August 2021 |
| | | | | KR | 20220132534 | A | 30 September 2022 |
| | | | | JP | WO2021153007 | A1 | 01 January 2022 |
| | | | | TW | 875890 | B1 | 11 March 2025 |
| | | | | CN | 114930580 | B | 06 May 2025 |
| CN | 102420324 | A | 18 April 2012 | None | | | |
| CN | 108376775 | A | 07 August 2018 | None | | | |
| JP | 2011233438 | A | 17 November 2011 | JP | 5604962 | B2 | 15 October 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411719693X